# EUROPEAN PATENT APPLICATION

(11) **EP 3 835 346 A1**
(43) Date of publication of application: **16.06.2021**
(21) Application number: 20165143.7
(22) Date of filing: 24.03.2020
(51) Int. Cl.: C08J 11/12, C08L 67/02

(54) **A METHOD TO INCREASE INTRINSIC VISCOSITY OF RECYCLING POLYESTER WASTE**

(30) Priority: 13.12.2019 TW 108145717
(71) Applicant: Tai Su Energy Technology Co., Ltd., Taoyuan City 32853 (TW)
(72) Inventor: LIAO, Chiu-Huei, 32853 Taoyuan City (TW)
(74) Representative: Cabinet Chaillot

(57) **Abstract**

The present invention relates to a method to increase intrinsic viscosity of recycling polyester waste, first, shredding the recycled polyester waste, pouring the shredded polyester waste into a melting unit (20) for smelting for achieving melting status, after filtration, pouring the semi-finished pellet into a reactor tank (40), the molecular chain of the melting polyester will depolymerize to a shorter molecular chain and further repolymerize to a molecular chain fitting the requirement, and using a vacuum unit (50) to remove the organic impurity, moisture and dirt for increasing the intrinsic viscosity of the semi-finished pellet to make intrinsic viscosity be higher than 0.65dl/g; the present invention increases intrinsic viscosity of recycling polyester waste by changing the I.V. of the RPET and the structure of the molecular chain, enhancing the quality of the RPET for increasing applicability and economic benefits of RPET.

## Description

### BACKGROUND OF THE INVENTION

### 1. Field of the Invention:

The invention relates to a method to increase intrinsic viscosity of recycling polyester waste, especially to one that using a vacuum unit to remove the organic impurity, moisture and dirt for increasing the intrinsic viscosity of the semi-finished pellet.

### 2. Description of the Related Art

According to Taiwan Textile Research Institute research about textile industry, polyester industry is growing fast and has the biggest productivity, however, the polyester waste has caused huge pollutions to the environment, nowadays, for the sustainable development, the recycle of the polyester waste is global focus, and the recycle technology is also growing. Wherein, the recycle of the polyester bottle can become the material of making polyester fiber, also it can reduce the pollution and the use of gas; comparing to the manufacturing with new polyester material, the recycle polyester fiber save 80% energy consumption and reduce 75% of CO₂ emissions. Waste fiber and waste cloth during polyester fiber manufacturing are also available for polyester recycle.

After washed, waste polyester bottle, waste fiber and waste cloth are made into flake, after drying, compressing, melting, filtration, extrusion, striping, cooling and cutting, the recycled polyester are made into polyester chips for producing all kinds of green product.

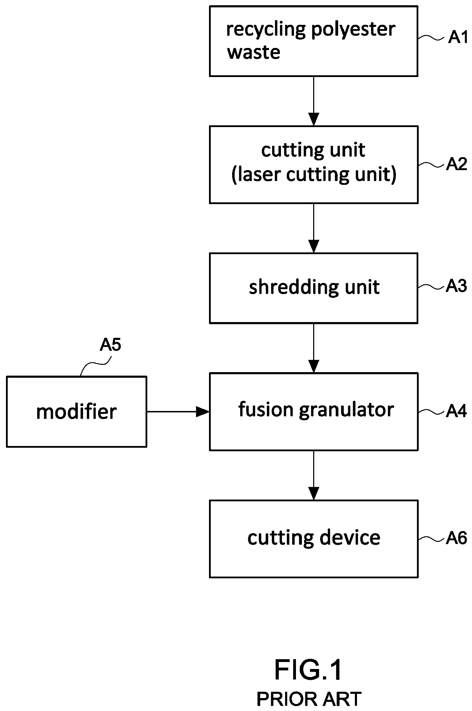

FIG. 1 lillustrated a conventional system of polyester recycling, a system recycling waste cloth and granulating, comprising a cutting unit **A2** having a laser cutting unit for cutting a polyethylene terephthalate (PET) textile fabric for recycling polyester waste **A1**; a shredding unit **A3** including multiple cutter, said shredding unit **A3** cools the PET textile fabric and shreds the PET textile fabric by cutter; a fusion granulator **A4** including multiple screw rod, mixing a modifier **A5** with the PET textile fabric to do cross-linking reaction to form a recycled polyethylene terephthalate (RPET); and a cutting device **A6**, including water cooling cutting unit for cutting the RPET.

The PET recycle method above mentioned, processing the melting pellet directly via an extruder. However, the melting process creates ethylene glycol, water and other volatility organic by-product, therefore, the intrinsic viscosity (I.V.) of the RPET will be lower than 0.65dg/l, due to the low I.V., the finished pellet can only be used in low level product; the application range is limited, because it cannot be used in product which required high quality and high intensity. The disadvantage of the application range becomes the biggest problem of this system.

### SUMMARY OF THE INVENTION

It is a primary objective of the present invention to provide a method to increase intrinsic viscosity of recycling polyester waste, by changing the I.V. of the PET and the structure of the molecular chain enhance the quality of the PET for increasing applicability and economic benefits of RPET.

In order to achieve the above objectives, the present invention comprises steps as following:
a). shredding the recycled polyester waste;
b). pouring the shredded polyester waste into a melting unit for smelting for achieving melting status;
c). pouring the melting polyester into a filtration unit for removing the inorganic impurity to form a semi-finished pellet;
d). having a reactor tank, the reactor tank is linked to a vacuum unit and a control unit for controlling the heating temperature and time of the reactor tank;
e). pouring the semi-finished pellet into the reactor tank under final temperature 250°C -300°C, the molecular chain of the melting polyester will depolymerize to a shorter molecular chain, said shorter molecular chain further repolymerize to a molecular chain fitting the requirement, and using a vacuum unit to remove the organic impurity, moisture and dirt for increasing the intrinsic viscosity of the semi-finished pellet to make intrinsic viscosity be higher than 0.65dl/g; and
f). pouring the semi-finished pellet into a cutting unit to form Polyester chips.

Furthermore, said step a). includes a shredding unit for shredding the recycled polyester waste, said shredding unit can be an impact breaker or a shredding machine.

Also, said step b). includes a screw type extruder.

Also, the filtration unit in said step c). includes a polyester melt filter.

Also, the reactor tank in said step d). is composed of a tank body, a tank lid, a jacket, an agitator and a driving unit, and the heating methods include electric heating, double boiling, heat transfer oil heating, far infrared heating and coil heating.

Also, the vacuum unit in said step d). can be a vacuum pump.

Also, the control unit in said step d). can be a processor or a controller.

Also, in said step e)., the intrinsic viscosity of the semi-finished pellet is between 0.65-0.9dl/g.

Also, the cutting unit in said step f). can be a slicer or a granulator.

With the feature above mentioned, the present invention has simple manufacturing steps, worked suitable for RPET, increasing the I.V., and solved the problems application limit problems of RPET and increased the economic benefits.

### BRIEF DESCRIPTION OF THE DRAWINGS

FIG. 1 is a schematic diagram illustrating a polyester waste recycling system according to the prior art;
FIG. 2 is a flow diagram of an applicable embodiment of the recycling steps of the present invention;
FIG. 3 is a schematic diagram illustrating the structure of the polyester waste recycling device of the present invention;
FIG. 4 is a schematic diagram illustrating the structure of the reactor tank of the present invention.

### DETAILED DESCRIPTION OF THE PREFERRED EMBODIMENT

For better understanding of present invention, I provide the embodiment and drawing enclosed for detailed description. Those who skilled in the art can understand purpose, feature and benefit of the present invention from the contents disclosed in this specification. Kindly noted that the present invention can be implemented or applied through other different specific embodiments and based on different viewpoints various details in this specification can be various changed without departing from the spirit of the present invention. In addition, the drawings attached to the present invention are merely a schematic illustration and they are not depicted in actual dimensions. The following embodiments will further describe the related technical content of the present invention in detail, but the disclosed content is not intended to limit the technical scope of the present invention.

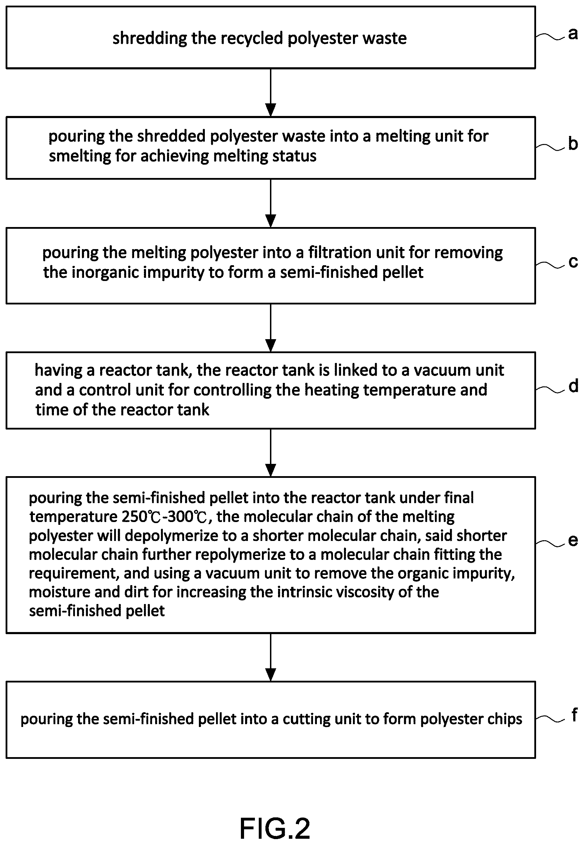

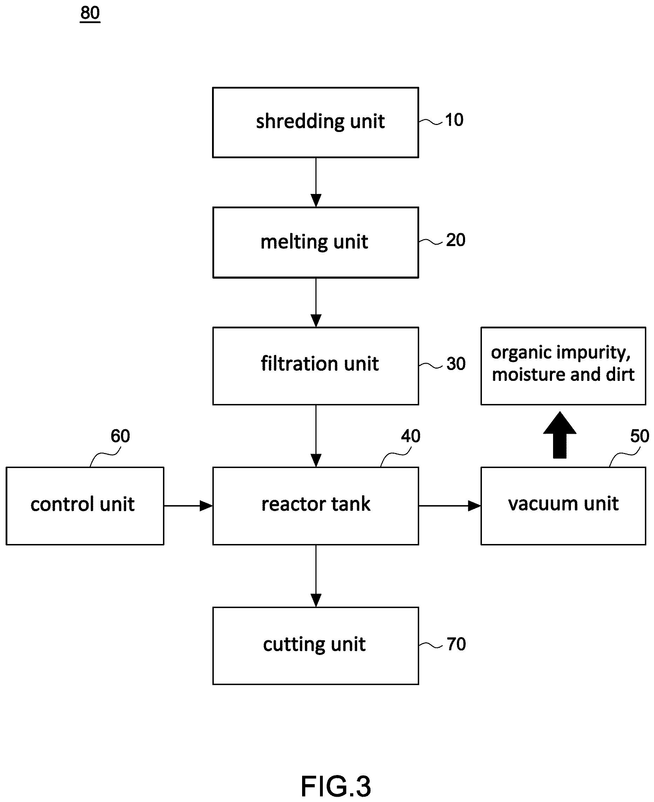

Referring to FIGS. 2-4, FIG. 2 disclosed a flow diagram of an applicable embodiment of the recycling steps of the present invention, FIG. 3 is a schematic diagram illustrating the structure of the polyester waste recycling device **80** of the present invention; said polyester waste recycling device comprises: a shredding unit **10,** a melting unit **20,** a filtration unit **30**, a reactor tank **40,** a vacuum unit **50,** a control unit **60,** and a cutting unit **70**; said polyester waste recycling device **80** of is provide for below mentioned the method and the process of increasing intrinsic viscosity of recycling polyester waste.

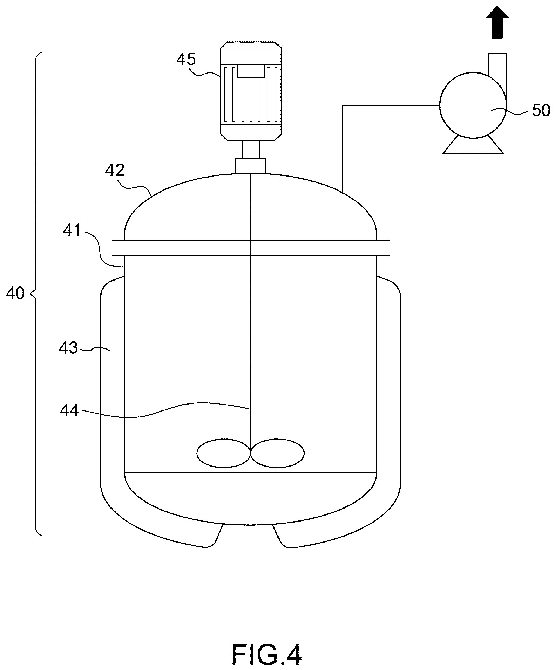

Referring to FIG. 2, the present invention is the method to increase intrinsic viscosity of recycling polyester waste, comprising steps as following:
a). shredding the recycled polyester waste; the polyester waste includes: PET waste cloth, waste PET fiber and PET flake, these materials need to be shredded base on their own characteristic before melting process, wherein the PET flake do not need to be shredded. In this embodiment have a shredding unit **10** for shredding PET waste, said shredding unit **10** can be an impact breaker or a shredding machine. The impact breaker and the shredding machine can be conventional products, so I won't mention its details in the specification.
b). pouring the shredded polyester waste into a melting unit **20** for smelting for achieving melting status; in this embodiment, the melting unit **20** includes a screw type extruder.
c). pouring the melting polyester into a filtration unit **30** for removing the inorganic impurity to from a semi-finished pellet; in this embodiment, the filtration unit **30** includes a polyester melt filter for filtering solid impurities to assure quality. The operating principles are: The melting PET material came out from the screw type extruder **20** and going into the filtration unit **30**, when the melt fill up the filtration chamber, under the influence of pressure, the melt went through the filter disc, the filter disc blocks the impurity and the gel particles with larger grain size, the filtered melt went through the filter disc and mixed via the core cube, and further came out from the outlet.
   The technology of the equipment in step a). and c). are belonged to prior art, so I won't mention its details in the specification.
d). providing a reactor tank **40,** said reactor tank **40** is connected to a vacuum unit **50** and a control unit **60**, said control unit **60** controls the heating temperature and time of said reactor tank **40**, said reactor tank **40** adjusts the process detail based on the characteristics of different kinds recycled polyester; in this embodiment, said control unit **60** can be a processor or a controller.
   Referring to FIG. 4, in this embodiment, the reactor tank **40** is composed of a tank body **41,** a tank lid **42,** a jacket **43,** a agitator **44** and a driving unit **45**, and the heating methods include electric heating, double boiling, heat transfer oil heating, far infrared heating and coil heating.
e). pouring the semi-finished pellet into the reactor tank **40** under final temperature 250°C-300°C , depolymerizing the molecular chain of the melting polyester and repolymerizing the homogeneous molecular chain, using a vacuum unit **50** to remove the organic impurity, moisture and dirt for increasing the intrinsic viscosity of the semi-finished pellet to make intrinsic viscosity be higher than 0.65dl/g; In this embodiment, the intrinsic viscosity characterizes the molecular chain, the higher the intrinsic viscosity is, the stronger the molecular chain is, via the process of the step e)., the polyester will depolymerize to a shorter molecular chain, said shorter molecular chain further repolymerize to a molecular chain fitting the requirement, and achieve changing the intrinsic viscosity, the melting point, and the structure of molecular chain to enhance the quality. The intrinsic viscosity of said semi-finished pellet is higher than 0.65dl/g, to deal with the different kinds of PET waste and requirements, using the method of the present invention can make the intrinsic viscosity to be between 0.65-0.9dl/g or 0.7-0.8dl/g.
f). pouring the semi-finished pellet into a cutting unit **70** to form RPET chips. In this embodiment, the cutting unit **70** can be a slicer or a granulator. However, the technology of the slicer and the granulator are belonged to prior art, so I won't mention its details in the specification.

By the features mentioned above, the present invention has the benefits of simple processing step, suitable for recycling the recycled PET, increasing the intrinsic viscosity and solving the problems of the application of recycled PET, the present invention provides a new way for resource reusing with extremely high economic benefits and industrial applicability.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A method to increase intrinsic viscosity of recycling polyester waste, comprising steps as following:
a) shredding the recycled polyester waste;
b) pouring the shredded polyester waste into a melting unit (20) for smelting for achieving melting status;
c) pouring the melting polyester into a filtration unit for removing the inorganic impurity to form a semi-finished pellet;
d) having a reactor tank (40), the reactor tank (40) is linked to a vacuum unit (50) and a control unit (60) for controlling the heating temperature and time of the reactor tank (40);
e) pouring the semi-finished pellet into the reactor tank (40) under final temperature 250°C-300°C, the molecular chain of the melting polyester will depolymerize to a shorter molecular chain, said shorter molecular chain further repolymerize to a molecular chain fitting the requirement, and using the vacuum unit (50) to remove the organic impurity, moisture and dirt for increasing the intrinsic viscosity of the semi-finished pellet to make intrinsic viscosity be higher than 0.65dl/g; and
f) pouring the semi-finished pellet into a cutting unit (70) to form polyester chips.

2. The method to increase intrinsic viscosity of recycling polyester waste as claimed in claim 1, wherein said step a) includes a shredding unit (10) for shredding the recycled polyester waste, said shredding unit (10) can be an impact breaker or a shredding machine.

3. The method to increase intrinsic viscosity of recycling polyester waste as claimed in claim 1, wherein said melting unit (20) in step b) includes a screw type extruder.

4. The method to increase intrinsic viscosity of recycling polyester waste as claimed in claim 1, wherein the filtration unit (30) in said step c) includes a polyester melt filter.

5. The method to increase intrinsic viscosity of recycling polyester waste as claimed in claim 1, wherein the reactor tank (40) in said step d) is composed of a tank body (41), a tank lid (42), a jacket (43), an agitator (44) and a driving unit (45), and the heating methods include electric heating, double boiling, heat transfer oil heating, far infrared heating and coil heating.

6. The method to increase intrinsic viscosity of recycling polyester waste as claimed in claim 1, wherein the vacuum unit (50) in said step d) can be a vacuum pump.

7. The method to increase intrinsic viscosity of recycling polyester waste as claimed in claim 1, wherein the control unit (60) in said step d) can be a processor or a controller.

8. The method to increase intrinsic viscosity of recycling polyester waste as claimed in claim 1, wherein the intrinsic viscosity of the semi-finished pellet in said step e) is between 0.65-0.9dl/g.

9. The method to increase intrinsic viscosity of recycling polyester waste as claimed in claim 1, wherein the cutting unit (70) in said step f) can be a slicer or a granulator.
